(19) Europäisches Patentamt
European Patent Office
Office européen des brevets

(11) **EP 1 869 109 B1**

(12) **EUROPÄISCHE PATENTSCHRIFT**

(45) Veröffentlichungstag und Bekanntmachung des Hinweises auf die Patenterteilung:
**05.11.2008 Patentblatt 2008/45**

(51) Int Cl.:
**C08J 5/18** *(2006.01)* **B32B 27/32** *(2006.01)*
**C08F 210/06** *(2006.01)* **C08F 297/08** *(2006.01)*

(21) Anmeldenummer: **06725043.1**

(22) Anmeldetag: **14.03.2006**

(86) Internationale Anmeldenummer:
**PCT/EP2006/060691**

(87) Internationale Veröffentlichungsnummer:
**WO 2006/108747 (19.10.2006 Gazette 2006/42)**

(54) **VERWENDUNG EINES HOCHVISKOSEN, WEITGEHEND AMORPHEN POLYOLEFINS ZUR HERSTELLUNG EINER FOLIE**

USE OF A HIGHLY VISCOUS LARGELY AMORPHOUS POLYOLEFIN FOR THE PRODUCTION OF A FILM

UTILISATION D'UNE POLYOLEFINE TRES VISQUEUSE, ESSENTIELLEMENT AMORPHE, DANS LA FABRICATION D'UNE PELLICULE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.04.2005 DE 102005017200**

(43) Veröffentlichungstag der Anmeldung:
**26.12.2007 Patentblatt 2007/52**

(73) Patentinhaber: **Degussa GmbH**
**40474 Düsseldorf (DE)**

(72) Erfinder:
• **Becker, Hinnerk Gordon**
 **45289 Essen (DE)**
• **Wey, Hans Günther**
 **45470 Mühlheim (DE)**
• **Vornholt, Marion**
 **45701 Herten (DE)**
• **Vey, Marlies**
 **45772 Marl (DE)**
• **Mindach, Lutz**
 **44797 Bochum (DE)**
• **Zagefka, Hans-Dieter**
 **45721 Haltern Am See (DE)**

(56) Entgegenhaltungen:
**EP-A- 0 335 484** **US-B1- 6 380 341**
**US-B1- 6 586 543**

• **PATENT ABSTRACTS OF JAPAN Bd. 1999, Nr. 08, 30. Juni 1999 (1999-06-30) & JP 11 058634 A (YAMATO ESURON KK), 2. März 1999 (1999-03-02) in der Anmeldung erwähnt**

EP 1 869 109 B1

**Beschreibung**

Gegenstand der Erfindung ist die Verwendung eines hochmolekularen und gleichzeitig weitgehend amorphen Poly-α-olefins zur Herstellung einer Folie und darüber hinaus eine Folie, die mindestens eine Schicht auf Basis dieses Poly-α-olefins enthält. Der Begriff "Folie" schließt hier und im Folgenden ausdrücklich den Begriff "Film" mit ein. Beide Begriffe werden in der Regel synonym verwendet.

In der JP-A-2003073511 werden nicht gestreckte, nicht orientierte Mehrschichtfilme mit einer guten Balance aus Gleitfähigkeit, Schlagzähigkeit und Transparenz als laminierte Verpackungsfolien beschrieben. Zur Herstellung dieser Filme werden kristalline Randomcopolymere aus 85 bis 98,5 Mol-% Propen und 15 bis 1,5 Mol-% eines α-Olefins mit MFR-Werten von 2 bis 20 g/10 min. und Schmelzpunkten $T_m$ von 120 bis 150 °C verwendet. Diese werden mit einem Polyethylenwachs und gegebenenfalls mit einem Polyolefinelastomer gemischt, um die gewünschte Eigenschaftskombination einzustellen. Nachteilig ist jedoch, dass derartige auf Propylenpolymerisaten basierende Folien nicht auf Polyethylen (als Substrat oder Folienschicht) haften; darüber hinaus wäre eine vereinfachte Rezeptur wünschenswert, bei der die gewünschten Materialeigenschaften nicht erst durch die Abmischung hoch- und niedermolekularer Komponenten eingestellt werden müssen.

In der JP-A-2001171057 wird die Herstellung von kälteresistenten, schlagzähen, laminierten Verpackungsfilmen für schwere Verpackungsgüter beschrieben. Die Dreischichtfilme besitzen eine Außenschicht aus einem kristallinen Propen-α-Olefin-Copolymer, eine Mittelschicht aus einer Mischung eines Ethen-α-Olefin-Copolymers sowie eine Außenschicht aus einem kristallinen Homopolypropylen. Das Ethen-α-Olefin-Copolymer der Mittelschicht wird als Schlagzähmodifier benötigt. Wünschenswert wäre allerdings die Verwendung eines Polyolefins als Schichtmaterial, das per se bereits die nötige Tieftemperaturschlagzähigkeit besitzt. Auf diese Weise ließen sich Misch- und Verarbeitungsschritte einsparen und die Rezeptur der Folie deutlich vereinfachen.

In der JP-A-09001751 werden transparente Mehrschichtfolien für Verpackungsanwendungen beschrieben, die aus mindestens drei Schichten bestehen. Die Außenschicht und die Innenschicht besteht aus folgenden Komponenten:

(a) einem $C_2$-α-Olefin($C_4$-$C_{10}$)-Copolymer (Anteil 40 bis 90 Gew.-%) mit einer MFR von 0,1 bis 10 g/10 min., einer Dichte von 0,880 bis 0,925 g/cm³ und einer Polydispersität von 2 bis 3;

(b) einem $C_2$-α-Olefin($C_4$-$C_{10}$)-Copolymer (Anteil 0 bis 40 Gew.-%) mit einer MFR von 0,1 bis 5 g/10 min., einer Dichte von 0,90 bis 0,925 g/cm³ und einer Polydispersität von 3 bis 6;

(c) einem $C_2$-α-Olefin($C_3$-$C_{10}$)-Copolymer (Anteil 40 bis 90 Gew.-%) mit einer MFR von 0,1 bis 20 g/10 min. und einer Dichte von 0,850 bis 0,900 g/cm³;

(d) einem LDPE-Polymer (Anteil 5 bis 20 Gew.-%) mit einer Dichte von 0,915 bis 0,930 g/cm³.

Die Zwischenschicht(en) bestehen aus

(e) einem $C_4$-Copolymer (Anteil 40 bis 100 Gew.-%) mit einer MFR von 0,1 bis 5 g/10 min. und einer Dichte von 0,890 bis 0,925 g/cm³ sowie einem $C_4$-$C_2$-$C_3$-Terpolymer (Anteil 0 bis 60 Gew.-%) mit einem $C_3$-Gehalt von 50 bis 98 Mol-% und einer MFR von 0,1 bis 100 g/10 min. Als (zusätzliche) weitere Komponenten werden außerdem ein $C_4$-$C_3$-Copolymer, ein $C_4$-$C_2$-4-Methyl-1-penten-Copolymer und ein $C_2$-$C_6$-Copolymer genannt.

Nachteilig ist hier, dass die gewünschten Materialeigenschaften durch die Abmischung verschiedener Polyolefine eingestellt werden müssen, was einen erhöhten Logistik- und Formulierungsaufwand mit sich bringt.

In der JP-A-2002294216 werden Polymerzusammensetzungen für die Verwendung in Dichtstoffen sowie für Filme im Verpackungsbereich beschrieben. Die Polymerzusammensetzung besteht aus einem Polymerblend, das sich aus 3 Bestandteilen A, B und C zusammensetzt. Komponente A (20 bis 90 Gew.-%) besteht aus $C_3$-Polymeren, die einen MFR [230 °C/2,16 kg] zwischen 0,1 und 20 g/10 min und einen Schmelzpunkt $T_m$ von 125 bis 155 °C aufweisen. Als Beispiel werden $C_3$-$C_4$-$C_2$-Terpolymere genannt. Die Komponente B besteht aus einem kristallinen $C_4$-α-Olefin-Copolymer mit einem MFR von 0,1 bis 25 g/10 min. und einem Schmelzpunkt $T_m$ von 50 bis 130 °C. Als Beispiele werden ein $C_4$-$C_3$-Copolymer oder ein $C_4$-$C_2$-Copolymer mit einem α-Olefin-Gehalt von 0,5 bis 30 Mol-% genannt. Die Komponente (C) besteht aus HDPE (0,5 bis 15 Gew.-%) mit einer Dichte von 0,940 bis 0,980 und einem MFR von 0,01 bis 20 g/10 min. Es wird außerdem eine Oberflächenbehandlung der Folie mittels Corona beschrieben.

Auch hier ist nachteilig, dass die gewünschten Materialeigenschaften durch die Abmischung verschiedener Polyolefine eingestellt werden müssen. Zudem ist die Coronabehandlung aufwendig und teuer.

Die DE-A-101 33 903 beschreibt bei niedriger Temperatur versiegelbare Folien auf Polypropylenharzbasis, insbesondere für den Einsatz in Hygienefilmen. Die Folien bestehen aus einer komplexen Mischung verschiedener Copolymerkomponenten, die im wesentlichen kristallin sind. Auch hier ist nachteilig, dass die gewünschten Materialeigenschaften durch die Abmischung verschiedener Polyolefine eingestellt werden müssen. Zudem fehlt dem Material wegen der vergleichsweise hohen Kristallinität eine ausreichende Haftfähigkeit.

In der JP-A-11058634 werden weiche transparente Folienbahnen auf Basis synthetischer Harze für Anwendungen im Verpackungsbereich (insbesondere Elektroverpackungen) beschrieben. Dabei werden LDPE- und/oder iPP-Außenschichten und eine Innenschicht aus einem Compound aus amorphem Poly-$\alpha$-olefin (APAO) und iPP eingesetzt. Das iPP-APAO-Compound besteht aus 50 bis 70 Gew.-% iPP sowie 30 bis 50 Gew.-% APAO. Das APAO besteht dabei aus 1 bis 10 Gew.-% $C_2$, 5 bis 30 Gew.-% $C_4$; der Rest ist $C_3$. Als Beispiele für das verwendete APAO werden die Produkte UBETAC von UbeRexene Industries, explizit UT2780, genannt. Diese Produkte sind amorph und von verhältnismäßig niedrigem Molekulargewicht. Es wäre jedoch wünschenswert, die in der JP-A-11058634 beschriebene Verwendung von Mischungen hoch- und niedrigviskoser kristalliner und amorpher Polymere zu vermeiden, um zahlreiche Misch- und Verarbeitungsschritte einzusparen und die Rezeptur der Folie zu vereinfachen.

Die bisherigen Folien des Standes der Technik können bislang nicht befriedigen. Werden für die Folien- bzw. Filmherstellung APAOs verwendet, die auf $MgCl_2$-geträgerten Systemen polymerisiert wurden, weisen diese im Allgemeinen eine zu geringe Kristallinität bzw. eine zu stark ausgeprägte Strukturviskosität bzw. ein besonders ungünstiges Verhältnis dieser beiden Materialparameter auf. Dies führt einerseits zu hohen Oberflächenklebrigkeiten und sehr langen "offenen Zeiten", andererseits zu einer schlechten Verarbeitbarkeit. Besonders die Kristallisationsgeschwindigkeit (und damit auch die offene Zeit) erweist sich hier als "k.o.-Kriterium", da bei zu langsamer Kristallisation die Identitätsbildung der einzelnen Folienschichten stark verzögert und damit eine sinnvolle Konfektionierung der Folien verhindert wird. Vollständig amorphe Polyolefine bzw. Polyolefine, die im Wesentlichen keine Kristallinität besitzen, weisen starke Nachteile bei der Verarbeitbarkeit auf. Sie zeigen sehr lange offene Zeiten, was zu sehr langen Verarbeitungszeiten führt. Für den Einsatz in schnell laufenden Verarbeitungsmaschinen sind sie bzw. die aus ihnen hergestellten Folien nicht geeignet. Das Verhältnis von Rückstellkraft zu Elastizität bzw. Plastizität ist bei Folien auf Basis derartiger amorpher Polyolefine in der Regel schlecht. Der Einsatz von inneren bzw. externen Donoren bei der Polymerisation von Polyolefinen für die Folienherstellung führt in der Regel zu Polymerisaten mit zu hoher Kristallinität, die zu einer zu geringen Haftung auf den übrigen Folienschichten und damit zu einer Delaminierung der Mehrschichtfolien entweder bereits bei der Verarbeitung oder aber in der Anwendung führt. Für den Einsatz in schnell laufenden Verarbeitungsmaschinen sind sie nicht geeignet. Das Verhältnis von Rückstellkraft zu Elastizität bzw. Plastizität ist bei Folien auf Basis derartiger rein kristalliner Polyolefine in der Regel schlecht. Werden amorphe Polyolefine verwendet, die mit Hilfe von Metallocenkatalysatoren polymerisiert wurden und die in der Regel niedrige Polydispersitäten ($\leq 5$) aufweisen, liegt der Erweichungspunkt im Allgemeinen sehr niedrig (z. T. deutlich unter 100 °C). Außerdem besitzen derartige Polymere häufig einen wachsartigen Charakter, so dass sie die für die Herstellung von Folien mit schnell laufenden Verarbeitungsmaschinen gestellten Anforderungen nicht erfüllen können. Insbesondere führt die niedrige Erweichungstemperatur zu Problemen bei der Abkühlung der Folien, bei der Orientierung der Folien und bei der Identitätsbildung der einzelnen Folienschichten. Für den Einsatz in schnell laufenden Verarbeitungsmaschinen sind sie nicht geeignet. Das Verhältnis von Rückstellkraft zu Elastizität bzw. Plastizität ist bei Folien auf Basis derartiger Polyolefine in der Regel schlecht. Derzeit werden häufig Mischungen niederviskoser APAOs mit hochviskosen, teilweise kristallinen Random-Propylenpolymeren zur Modifizierung der Folieneigenschaften eingesetzt. Das bisherige Verfahren, bei dem Mischungen niederviskoser APAOs mit hochviskosen Polypropylenen zum Einsatz kommen, hat aber folgende Nachteile:

1) Die Mischung der beiden sehr unterschiedlich viskosen Komponenten ist zeit- und energieaufwendig und damit kostenintensiv.
2) Die Rezepturen der Folien werden kompliziert und aufwendig in ihrer Herstellung.
3) Das homogene Mischen von niedrig- und hochviskosen Polymerschmelzen erfordert einen hohen (Scher)Energieeintrag, was sich negativ auf die Viskositätsstabilität sowie die Thermostabilität auswirkt.
4) Niederviskose Mischungskomponenten enthalten naturgemäß größere Mengen niedermolekularer Anteile. Dies schränkt die Anwendungen z. B. im Automobil-Bereich durch unakzeptabel hohe Fogging-Werte ein.
5) Mischungen aus vielen unterschiedlichen Bestandteilen weisen im Vergleich zur Verwendung nur eines bzw. weniger Polymerbestandteile nachteilige Materialeigenschaften sowie eine mangelnde Reproduzierbarkeit der Materialeigenschaften auf.
6) Gefahr einer "klebrigen Haptik" durch Migration niedermolekularer, klebriger Anteile an die Oberfläche der Folien.

Demgemäss stellte sich die Aufgabe, ein geeignetes Polyolefin für die Verwendung in Ein- oder Mehrschichtfolien zur Verfügung zu stellen, das ein ausreichend hohes Molekulargewicht besitzt, um als Material einer Folienschicht verwendbar zu sein, und das eine gute Verträglichkeit bzw. gute Schichtenhaftung sowohl zu Polyethylen als auch zu Polypropylen besitzt. Das Polyolefin sollte zudem bei den üblichen Folienschichtdicken transparent sein, trotzdem aber ausreichend kristallin sein, um eine ausreichende Kohäsion und ein auch anspruchsvollen Anwendungen genügendes Verhältnis von Rückstellkraft zu Elastizität bzw. Plastizität zu besitzen. Es sollte zudem ausreichend Kristallinität vorhanden sein, um, sofern gewünscht, eine bei Umgebungstemperatur nicht klebende Oberfläche sowie eine zu vernachlässigende Kriechneigung sicherzustellen. Darüber hinaus sollte es gut heißsiegelfähig sein.

Diese Aufgabe wurde durch die Verwendung eines Polyolefins zur Herstellung von Folien gelöst, das folgende Monomereinheiten enthält:

a) Maximal 25 Gew.-%, bevorzugt 0,1 bis 20 Gew.-% und besonders bevorzugt 1 bis 16 Gew.-% Einheiten, die sich von Ethen herleiten,

b) maximal 75 Gew.-%, bevorzugt 0,1 bis 70 Gew.-% und besonders bevorzugt 4 bis 65 Gew.-% Einheiten, die sich von Propen herleiten, wobei die Obergrenze dieser Einheiten in weiteren bevorzugten Ausführungsformen bei 60, 55 oder 50 Gew.-% liegt,

c) 5 bis 100 Gew.-%, bevorzugt 10 bis 95 Gew.-% und besonders bevorzugt 15 bis 90 Gew.-% Einheiten, die sich von einem $\alpha$-Olefin mit 4 bis 20 C-Atomen herleiten,

wobei das Polyolefin folgende Parameter aufweist:

d) ein gewichtsmittleres Molekulargewicht im Bereich von 70.000 bis 10.000.000 g/mol, bevorzugt 85.000 bis 5.000.000 g/mol und besonders bevorzugt 100.000 bis 2.500.000 g/mol, wobei weitere bevorzugte Untergrenzen bei 120.000 g/mol bzw. 140.000 g/mol liegen,

e) eine Polydispersität im Bereich von 4 bis 60, bevorzugt im Bereich von 4,2 bis 40, besonders bevorzugt im Bereich von 4,5 bis 30, insbesondere bevorzugt im Bereich von 4,6 bis 20 und ganz besonders bevorzugt im Bereich von 4,8 bis 15,

f) eine Schmelzviskosität, gemessen durch Oszillationsrheometrie mit einer Schergeschwindigkeit von 1 Hz bei 190 °C, im Bereich von 100.000 bis 100.000.000 mPa•s, bevorzugt 200.000 bis 10.000.000 mPa•s und besonders bevorzugt 300.000 bis 5.000.000 mPa•s,

g) eine Nadelpenetration im Bereich von 3 bis 70 • 0,1 mm, bevorzugt im Bereich von 5 bis 35 • 0,1 mm und besonders bevorzugt im Bereich von 7 bis 25 • 0,1 mm,

h) eine Schmelzenthalpie im Bereich von 2 bis 100 J/g, bevorzugt im Bereich von 5 bis 75 J/g, besonders bevorzugt im Bereich von 10 bis 60 J/g und insbesondere bevorzugt im Bereich von 12 bis 50 J/g,

i) eine Glasübergangstemperatur $T_g$ im Bereich von -15 bis -80 °C, bevorzugt im Bereich von -20 bis -60 °C und besonders bevorzugt im Bereich von -25 bis -55 °C, sowie

j) ein Ende des Schmelzbereichs des kristallinen Anteils im Bereich von 85 bis 175 °C, bevorzugt im Bereich von 90 bis 173 °C und besonders bevorzugt im Bereich von 95 bis 170 °C.

Bevorzugt weist das Polyolefin einen Alpha-Wert im Bereich von 0,5 bis 0,9, bevorzugt im Bereich von 0,6 bis 0,9 und besonders bevorzugt im Bereich von 0,65 bis 0,85 auf.

Die Monomereinheiten gemäß a), b) und c) rühren vom Einbau des entsprechenden Olefins bei der Polymerisation bzw. Copolymerisation her. Das $\alpha$-Olefin gemäß c) ist beispielsweise 1-Buten, 1-Penten, 1-Hexen, 1-Octen, 1-Decen, 1-Dodecen, 1-Octadecen, 3-Methyl-1-buten, ein Methylpenten wie z. B. 4-Methyl-1-penten, ein Methylhexen oder ein Methylhepten.

Die Polymerzusammensetzung wird über Hochtemperatur-$^{13}$C-NMR bestimmt. Die $^{13}$C-NMR-Spektroskopie von Polymeren ist beispielsweise in folgenden Publikationen beschrieben:

[1] S. Berger, S. Braun, H.-O. Kalinowski, 13C-NMR-Spektroskopie, Georg Thieme Verlag Stuttgart 1985
[2] A.E. Tonelli, NMR Spectroscopy and Polymer Microstructure, Verlag Chemie Weinheim 1989
[3] J. L. Koenig, Spectroscopy of Polymers, ACS Professional Reference Books, Washington 1992
[4] J.C. Randall, Polymer Sequence Determination, Academic Press, New York 1977
[5] A. Zambelli et al: Macomolecules, 8, 687 (1975)
[6] A. Filho, G.Galland: J. Appl. Polym. Sci., 80, 1880 (2001)

Die Eigenschaften Haftung (z. B. auf Polymeren des Polyethylen- bzw. Polypropylentyps), Heißsiegelbarkeit und Plastizität, die Mischbarkeit mit Bitumen sowie die Fähigkeit, eine Verträglichkeit zwischen Polyethylen und Polypropylen zu vermitteln, etwa um Folienmaterial mit hoher Transparenz zu erhalten, können über die Polymerzusammensetzung individuell eingestellt werden. Im Falle der anspruchsgemäßen Co- bzw. Terpolymere handelt es sich um weitgehend statistische Polymere. Bei der Verwendung von Propen als Monomer liegt der Anteil isotaktischer $C_3$-Triaden in einer bevorzugten Ausführungsform zwischen 20 und 85 %, bezogen auf die insgesamt vorhandenen $C_3$-Triaden, und besonders bevorzugt zwischen 35 und 70 %. Bei der Verwendung von 1-Buten als Monomer liegt der Anteil isotaktischer $C_4$-Triaden in einer bevorzugten Ausführungsform zwischen 10 und 75 %, bezogen auf die insgesamt vorhandenen $C_4$-Triaden, besonders bevorzugt zwischen 20 und 60 % und insbesondere bevorzugt zwischen 25 und 50 %. Diese Anteile lassen sich mittels Hochtemperatur-$^{13}$C-NMR bestimmen.

Die Bestimmung des Molekulargewichts erfolgt über Hochtemperatur-GPC. Die Bestimmung wird gemäß ASTM D6474-99 durchgeführt, jedoch bei einer höheren Temperatur (160 °C statt 140 °C) sowie einem geringeren Injektionsvolumen von 150 $\mu$l statt 300 $\mu$l. Als weitere Literatur zur GPC-Analyse von Polymeren sei angeführt:

H. G. Elias: "Makromoleküle"; Bd.2; Wiley-VCH; Weinheim 2001;

Z. Grubisic, P. Rempp, H. Benoit; Polym. Lett.; 5; 753 (1967);

K. A. Boni, F. A. Sliemers, P. B. Stickney; J.Polym.Sci.;A2; 6; 1579 (1968);

D. Goedhart, A. Opschoor; J. Polym. Sci.;A2; 8; 1227 (1970);

A. Rudin, H.L.W. Hoegy; J. Polym. Sci.;Al; 10; 217 (1972);

G. Samay, M. Kubin, J. Podesva; Angew. Makromol. Chem.; 72; 185 (1978);

B. Ivan, Z. Laszlo-Hedvig, T. Kelen, F. Tüdos; Polym. Bull.;8; 311 (1982);

K.-Q. Wang, S.-Y. Zhang, J. Xu, Y. Li, H.P. Li; J. Liqu. Chrom.; 5; 1899 (1982);

T.G. Scholte, H.M. Schoffeleers, A.M.G. Brands; J. Appl. Polym. Sci.; 29; 3763 (1984).

Als Lösungsmittel wird Trichlorbenzol verwendet. Die Messung erfolgt bei einer Säulentemperatur von 160 °C. Die dabei für die Auswertung der Elutionskurven verwendete universelle Kalibrierung wird auf Basis von Polyolefin-Standards durchgeführt. Die Ergebnisse sind nicht mit Messungen vergleichbar, deren Kalibrierungen auf Basis von artfremden Polymeren - z. B. auf Polystyrol-Basis - erfolgte, oder die ohne universelle Kalibrierung erfolgt sind, da ansonsten ein unzulässiger Vergleich unterschiedlicher dreidimensionaler Polymerstrukturen bzw. hydrodynamischer Radien erfolgt. Auch der Vergleich mit Messungen, die andere als das angegebene Lösungsmittel verwenden, ist nicht zulässig, da in unterschiedlichen Lösungsmitteln unterschiedliche dreidimensionale Polymerstrukturen bzw. hydrodynamische Radien vorliegen können, die zu einem abweichenden Ergebnis bei der Molekulargewichtsbestimmung führen.

Die Polydispersität $P_d$ ist als Quotient von zahlenmittlerer und gewichtsmittlerer Molmasse definiert. Sie ist insbesondere ein Maß für die Breite der vorliegenden Molmassenverteilung, die wiederum Rückschlüsse auf das vorliegende Polymerisationsverhalten sowie den verwendeten Katalysator zulässt. Außerdem ist sie auch ein Maß für den vorhandenen niedermolekularen Anteil, der wiederum Einfluss auf die Haftungseigenschaften der Polymermaterialien hat. Sie wird über Hochtemperatur-GPC bestimmt. Die Polydispersität ist in gewissen Grenzen für eine bestimmte Katalysator-Cokatalysator-Kombination charakteristisch. Die Molmassenverteilung kann dabei je nach verwendeter Verfahrensweise (z. B. 1, 2 oder mehr Rührkessel bzw. Kombinationen aus Rührkessel und Strömungsrohr) bzw. Reaktionsführung (Einfach- bzw. Mehrfachdosierung von Katalysator, Cokatalysator und Monomeren) entweder mono-, bi- oder multimodal sein. Die Polydispersität hat einen relativ starken Einfluss auf die Klebrigkeit des Materials bei Raumtemperatur sowie auf die Haftung.

Bei der Bestimmung der Molmassen mittels Gel-Permeations-Chromatographie (GPC) spielt der hydrodynamische Radius der in Lösung vorliegenden Polymerketten eine besondere Rolle. Als Detektionsmechanismen werden neben Wärmeleitfähigkeits-, RI- (Brechungsindex) bzw. UV/VIS- und FTIR- oder Lichtstreuungsdetektoren auch Viskositätsdetektoren eingesetzt. Betrachtet man die Polymerkette in Lösung als ungestörtes Knäuel, so lässt sich die Beziehung zwischen ihrer Grenzviskositätszahl und der Molmasse empirisch durch die sog. KMHS-Gleichung

$$[\eta] = K_v M_v^{\alpha}$$

beschreiben (H.-G. Elias, Makromoleküle, Band 2, 6. Auflage, Wiley-VCH, Weinheim 2001, S. 411-413). $K_v$ und $\alpha$ sind dabei Konstanten, die sowohl von der Konstitution, Konfiguration und Molmasse des Polymeren beeinflusst werden als auch vom Lösungsmittel und der Temperatur. Die wesentliche Aussage des Alpha-Wertes im vorliegenden Fall ist die des hydrodynamischen Radius; dieser hängt von den an den Polymerketten befindlichen Verzweigungsstellen ab. Bei einer geringen Verzweigung ist der Alpha-Wert hoch, bei einer höheren Verzweigung niedrig.

Die Schmelzviskosität wird gemäß ASTM D4440-1 durch Oszillationsrheometrie bestimmt, wobei mit einer Schergeschwindigkeit von 1 Hz gearbeitet wird. Die maximale Deformation der Probe wird so gewählt, dass sich die Probe während der gesamten Messdauer im linear viskoelastischen Bereich befindet. Viskoelastische Materialien zeichnen sich gegenüber Hookschen Festkörpern durch die Fähigkeit aus, aus einer Deformation resultierende Spannungen über eine bestimmte Zeit dissipativ abzubauen (Relaxation). Im Gegensatz zu Newtonschen Flüssigkeiten, die unter Einwirkung einer Scherung bzw. Dehnung einer ausschließlich irreversiblen Verformung unterliegen, können viskoelastische Fluide einen Teil der Deformationsenergie zurückgewinnen, nachdem die einwirkende Kraft entfernt wurde (sog. "Memory Effekt") [N.P.Cheremisinoff; "An Introduction to Polymer Rheology and Processing"; CRC Press; London; 1993]. Ein weiteres Kennzeichen polymerer Schmelzen ist das Auftreten einer sogenannten Strukturviskosität. Als solche bezeichnet man ein Verhalten, bei dem die Schubspannung als auftretende Kraft die Ausgangsstruktur des Materials in Abhängigkeit von der Schergeschwindigkeit abbaut. Da dieser Abbauprozess eine Mindestschergeschwindigkeit voraussetzt, fließt das Material unterhalb dieser Schergeschwindigkeit wie eine Newtonsche Flüssigkeit. Eine Erklärung liefert das Prinzip von Le Chatelier, wobei das "Ausweichen" der strukturviskosen Flüssigkeit (vor der mechanischen Beanspruchung) in der Ausrichtung entlang der Schubflächen zur Verminderung des Reibungswiderstandes besteht. Letzteres führt zum Abbau der Gleichgewichtsstruktur des Anfangszustandes und zum Aufbau einer schuborientierten Struktur, was wiederum ein erleichtertes Fließen (Viskositätsverminderung) zur Folge hat. In Polymerschmelzen ist der newtonsche Bereich nur bei sehr kleinen Schergeschwindigkeiten bzw. kleinen Scheramplituden wahrnehmbar. Seine Bestimmung ist über rheometrische Testmethoden (Amplituden-"Sweeps", d.h. Messung bei fester Frequenz in Abhängigkeit von der Scheramplitude) möglich und notwendig, wenn die Messung im reversiblen, d.h. reproduzierbaren Bereich durchgeführt werden soll [R.S.Lenk; "Rheologie der Kunststoffe"; C. Hanser Verlag; München; 1971; J. Meissner; "Rheologisches Verhalten von KunststoffSchmelzen und -Lösungen" in: "Praktische Rheologie der Kunststoffe"; VDI-Verlag; Düsseldorf; 1978; J.-F. Jansson; Proc.8th. Int .Congr. Rheol.; 1980; Vol.3]. Die Schwingungsrheometrie ist auf Grund ihrer geringen Krafteinwirkung, ihrer geringen Deformation und der somit geringen Auswirkung auf die Probenmorphologie besonders gut zur Untersuchung von Materialien geeignet, die ein stark strukturviskoses Verhalten zeigen. Die Strukturviskosität ist erst im Bereich ab 200.000 mPa•s stärker ausgeprägt. Nimmt man als Maßstab das Verhältnis der Schmelzviskositäten, die bei einer Schergeschwindigkeit von 10 Hz und einer Schergeschwindigkeit von 0,1 Hz bestimmt wurden, so liegt dieses Verhältnis für die beanspruchten Polymere zwischen 1 : 2 und 1 : 1000, bevorzugt zwischen 1 : 3 und 1 : 500 und besonders bevorzugt zwischen 1 : 5 und 1 : 50. Als rheologisches Kennzeichen des Verarbeitungsfensters (z. B. auf Kalandern oder auch in Schneckenmaschinen) sowie des besonderen Verhältnisses von molekularen Größen, wie z. B. der Molmasse und makroskopischen Materialeigenschaften wie etwa der Schmelzviskosität, kann das Verhältnis von Speichermodul zu Verlustmodul herangezogen werden. Dieses Verhältnis liegt für die anspruchsgemäßen Polymerisate bei einer Schergeschwindigkeit von 1 Hz im Temperaturbereich vom Ende des Schmelzbereichs bis 200 °C zwischen 1 : 1 und 1 : 100, bevorzugt zwischen 1 : 1,5 und 1 : 50 und besonders bevorzugt zwischen 1 : 2 und 1 : 20.

Die Nadelpenetration wird gemäß DIN EN 1426 bestimmt. Sie lässt sich ebenfalls auf bekannte Weise über die Monomerzusammensetzung und die Reaktionsbedingungen steuern.

Die Bestimmung der Schmelzenthalpie, der Glasübergangstemperatur und des Schmelzbereichs des kristallinen Anteils erfolgt über Differentialkalorimetrie (DSC) gemäß DIN 53 765 aus der 2. Aufheizkurve bei einer Heizrate von 10 K/min. Der Wendepunkt der Wärmestromkurve wird als Glasübergangstemperatur ausgewertet. In einer besonderen Ausführungsform liegt diese im Bereich von -40 bis -80 °C. Die Glasübergangstemperatur lässt sich auf bekannte Weise über die Monomerzusammensetzung und die Reaktionsbedingungen steuern. Generell führt die Verwendung von längerkettigen Monomeren zu niedrigeren Glasübergangstemperaturen. Ebenso führen Reaktionsbedingungen, bei denen sich auch kürzerkettige Polymere bilden (beispielsweise relativ hohe Polymerisationstemperaturen) in einem bestimmten Rahmen ebenfalls zur Absenkung der Glasübergangstemperatur. Die Schmelzenthalpie ist ein Maß für die Kristallinität des Polymeren. Die anspruchsgemäßen Polymere weisen eine relativ geringe Kristallinität auf, d. h. sie sind weitgehend, jedoch nicht vollständig, amorph. Es ist eine gewisse Kristallinität vorhanden, die für die geforderten Materialeigenschaften unabdingbar ist. Die beim Aufschmelzen detektierbaren kristallinen Bereiche erstrecken sich über einen großen Temperaturbereich von 20 bis 175 °C und sind von ihrer Intensität her je nach Lage unterschiedlich ausgeprägt. Die anspruchsgemäßen Polymerisate zeichnen sich in ihrer Kristallinität durch das Auftreten sowohl mono- als auch bi- und multimodaler Aufschmelzpeaks aus, die zum Teil scharf getrennt sind, zum Teil ineinander übergehen. Besonders bevorzugt sind Polymerisate mit bi- und multimodalen Aufschmelzpeaks. In einer möglichen Ausführungsform liegt die Schmelzenthalpie (als Maßstab für die Gesamtkristallinität) zwischen 2 J/g und 10 J/g. Durch die niedrige Kristallinität kann einerseits eine hohe Transparenz, andererseits ein spezielle Kombination von vorteilhaften Materialeigenschaften erreicht werden. Niedrig kristalline Polyolefine zeigen eine relativ hohe Oberflächenklebrigkeit (Adhäsion) bei Raumtemperatur, was z. B. für Zwischenlagen in Mehrschichtfolien vorteilhaft ist. Außerdem zeigen sie insgesamt ein flexibleres mechanisches Verhalten. Allerdings ist die Kohäsion solcher Materialien relativ gering, weshalb diese niedrigen Kristallinitäten nicht generell angestrebt werden. In einer weiteren möglichen Ausführungsform liegt die Schmelzenthalpie zwischen 10 J/g und 30 J/g, bevorzugt zwischen 15 J/g und 28 J/g. Durch die höhere Kristallinität kann eine besondere Kombination vorteilhafter Materialeigenschaften erzielt werden. Erfindungsgemäße Polymere mit relativ hohen Kristallinitäten, wie z. B. Polybuten bzw. Buten-Copolymere mit hohen Butenanteilen, weisen z. B. sehr gute Zugfestigkeiten auf. Gleichzeitig zeigen sie eine relativ geringe Oberflächenklebrigkeit, was z. B. bei Monolayerfilmen vorteilhaft ist.

Die anspruchsgemäß verwendeten Polyolefine weisen in vielen Fällen eine ausgeprägte Neigung zur Kaltkristallisation auf, wobei diese in einem Temperaturbereich von -10 bis 100 °C auftritt. Zur Beschleunigung der Kristallisation bzw. zur gezielten Einstellung bestimmter Kristallmodifikationen ist der Einsatz bekannter Nukleierungsmittel möglich, wie sie z. B. bei isotaktischen Polypropylenen eingesetzt werden. Diese können sowohl anorganischer als auch organischer Natur sein, sowie sowohl nieder- als auch hochmolekulare Komponenten enthalten, wobei in allen Fällen sowohl kristalline als auch amorphe Nukleierungsmittel eingesetzt werden können.

Die Kristallinität kann, dem Stand der Technik entsprechend, auch über die Löslichkeit in Xylol bestimmt werden. Hierbei wird ein Xylol-Isomerengemisch verwendet, wobei das Polymere unter Rückfluss gelöst und dann die Lösung auf Raumtemperatur abgekühlt wird.

Die Löslichkeit in Xylol liegt beim anspruchsgemäßen Polyolefin vorzugsweise zwischen 80 und 99,5 %, besonders bevorzugt zwischen 85 und 99 % und insbesondere bevorzugt zwischen 90 und 98 %. Die Bestimmung erfolgt so wie im experimentellen Teil beschrieben.

Das anspruchsgemäß verwendete hochviskose, weitgehend amorphe Polyolefin ist beispielsweise durch Polymerisation von $\alpha$-Olefin-Monomeren mit einem $TiCl_3 \cdot (AlCl_3)_n$-Mischkatalysator (n = 0,2 bis 0,5) erhältlich, wobei eine Trialkylaluminiumverbindung (etwa Triethylaluminium, bevorzugt Triisopropylaluminium, besonders bevorzugt Triisobutylaluminium) als Cokatalysator eingesetzt wird. Dabei muss ein besonderes Verhältnis von Katalysator zu Cokatalysator gewählt werden, um die beschriebenen Produkte mit den beschriebenen Eigenschaften zu erhalten. Das molare Verhältnis von Katalysator zu Cokatalysator liegt zwischen 1 : 1 und 1 : 10. Die Aktivität des verwendeten Katalysators liegt dabei zwischen 5.000 und 20.000 g Polymer/g Katalysator. Das Monomer Ethen wird gasförmig eingesetzt, während die Monomere Propen und 1-Buten sowohl gasförmig als auch flüssig eingesetzt werden können. Höhere Homologe werden flüssig eingesetzt. Werden Propen und/oder 1-Buten flüssig eingesetzt, so muss im verwendeten Reaktor ein den Reaktionsbedingungen entsprechender Druck gehalten werden, welcher eine ausreichende Monomerkonzentration in der flüssigen Phase gewährleistet. Als Molmassenregler kommt gasförmiger Wasserstoff zum Einsatz. Die Polymerisation wird in einem inerten Lösungsmittel durchgeführt, welches z. B. aus der Gruppe der aliphatischen Kohlenwasserstoffe ausgewählt ist. Das Massenverhältnis von Polymerisat zu Lösungsmittel beträgt zwischen 1 : 100 und 1 : 0,01, bevorzugt zwischen 1 : 50 und 1 : 0,1 und besonders bevorzugt zwischen 1 : 10 und 1 : 0,2. In einer speziellen Ausführungsform liegt es zwischen 1 : 1 und 1 : 0,01. Eine Polymerisation im vorgelegten Monomer ist ebenfalls möglich. Die Polymerisation wird entweder in einem Rührkessel oder in einer Rührkesselkaskade durchgeführt; in einer besonderen Ausführungsform kann auch ein Strömungsrohr bzw. ein rohrförmiger Reaktor mit Zwangsförderung (z. B. eine Schneckenmaschine) verwendet werden. Die Verwendung des rohrförmigen Reaktors mit Zwangsförderung kann entweder als alleinige Lösung oder in Kombination mit Rührkessel oder Rührkesselkaskade erfolgen. Hierbei sind sowohl eine Reihen- als auch eine Parallelschaltung der einzelnen Reaktoren möglich. Die Reaktionstemperatur liegt zwischen 30 und 220 °C, bevorzugt zwischen 70 und 150 °C und besonders bevorzugt zwischen 80 und 130 °C. In einer möglichen Ausführungsform, insbesondere wenn eine geringe Polydispersität angestrebt wird, liegt die Reaktionstemperatur zwischen 30 und 80 °C, bevorzugt zwischen 40 und 60 °C und besonders bevorzugt zwischen 40 und 50 °C. In einer weiteren möglichen Ausführungsform, insbesondere wenn eine hohe Polydispersität angestrebt wird, liegt die Reaktionstemperatur zwischen 80 und 200 °C, bevorzugt zwischen 100 und 200 °C und besonders bevorzugt zwischen 110 und 190 °C. Katalysator und Cokatalysator werden am Ende der Reaktion in geeigneter Weise zersetzt, wobei die zersetzten Katalysatorbestandteile entweder im Polymerisat verbleiben oder über einen Waschschritt entfernt werden. In der Praxis erfolgt die Zersetzung üblicherweise dergestalt, dass die in unreaktive Bestandteile überführten zersetzten Katalysatorkomponenten zumindest teilweise im Polymerisat verbleiben. Dabei wird das Polymerisat durch die in unreaktive Bestandteile überführten zersetzten Katalysatorkomponenten im erfindungsgemäßen Herstellungsprozess nicht eingefärbt. Die erfindungsgemäßen Polymerisate können dem Stand der Technik entsprechend entweder in Form ihrer Reaktionslösung oder zu einem späteren Zeitpunkt chemisch stabilisiert werden, um sie vor dem schädigenden Einfluss von höheren Temperaturen, Sonneneinstrahlung, Luftfeuchtigkeit und Sauerstoff zu schützen. Dabei können beispielsweise Stabilisatoren, die gehinderte Amine (HALS-Stabilisatoren), gehinderte Phenole, Phosphite, UV-Absorber wie z. B. Hydroxybenzophenone, Hydroxyphenylbenzotriazole usw. und/oder aromatische Amine enthalten, zum Einsatz kommen. Die wirksame Menge an Stabilisatoren liegt dabei normalerweise im Bereich von 0,1 bis 2 Gew.-%, bezogen auf das Polymer. Außerdem ist der Einsatz von Quenchern und weiteren Radikalfängern möglich.

Das anspruchsgemäße Polymer wird nach der Polymerisation entweder durch Ausfällen in einem gegenpolaren Fällungsmittel (etwa Alkohol wie z. B. Methanol oder Butanol) oder durch direkte Entgasung mit anschließendem Aufschmelzvorgang erhalten. Dabei können in beiden Fällen sowohl Rührkessel als auch Rührkesselkaskaden oder Strömungsrohre bzw. rohrförmige Reaktoren mit Zwangsförderung (beispielsweise eine Schneckenmaschine) verwendet werden. Bei letzterem ist insbesondere der Einsatz von mehrwelligen Schneckenmaschinen bevorzugt, beispielsweise von solchen mit Zentralspindel. Auch der Einsatz von klassischen Verdampfungsapparaten, wie z. B. Fallfilm- und/oder Dünnschichtverdampfern, ist möglich. Die Konfektionierung erfolgt beispielsweise über eine Granulierung oder eine Pulverisierung. Als Methoden der Granulierung sind z. B. die Unterwasserstrang- oder die Unterwasser-Vorkopfgranulierung möglich. Gegebenenfalls ist der Einsatz eines Tensides und/oder Dispergierhilfsmittels bzw. einer Trennmittelemulsion notwendig. Auch der Einsatz verflüssigter oder tiefkalter Gase, wie z. B. $CO_2$ und/oder $N_2$, als Kühlmittel ist möglich. Die Pulverisierung kann entweder durch einen separaten Mahlschritt oder durch Einsatz einer Versprühungsmethode erfolgen. In beiden Fällen ist auch der Einsatz von überkritischen Fluiden wie z. B. $CO_2$, Wasser oder Propan möglich. Bei diesem z. B. unter dem Namen PGSS bekannten Verfahren wird die Polymerschmelze mit einem überkritischen Medium vermischt und anschließend in einem Sprühturm verdüst. Dabei lassen sich durch die Düsen- und Turmgeometrie die Korngrößen steuern. Der Mahlprozess kann auch unter Verwendung tiefkalter Gase wie z. B. $CO_2$ und/oder $N_2$ erfolgen.

Um die Fließfähigkeit des Granulats und/oder Pulvers zu gewährleisten, können die im Polymerbereich üblicherweise verwendeten Fließhilfsmittel eingesetzt werden. Diese können sowohl anorganischer als auch organischer Natur sein sowie sowohl nieder- als auch hochmolekulare Komponenten enthalten, wobei in allen Fällen sowohl kristalline als auch amorphe Fließhilfsmittel eingesetzt werden können. Die Fließhilfsmittel können mit den anspruchsgemäßen Polyolefinen im Sinne der thermodynamischen Mischbarkeit sowohl verträglich als auch unverträglich sein. Besonders bevorzugt sind dabei Fließhilfsmittel, die mit den anspruchsgemäßen Polyolefinen verträglich sind. Als Fließhilfsmittel können z. B. Polyolefinwachse (sowohl auf Polyethylen- als auch auf Polypropylenbasis) als auch Fischer-Tropsch-Wachse eingesetzt werden. Auch Polyolefinwachse auf 1-Butenbasis können eingesetzt werden. Ebenso ist der Einsatz von Mikrowachsen möglich. Neben Wachsen können auch Olefinpolymere wie z. B. Polyethylen, Polypropylen und/oder Poly(1-buten), insbesondere isotaktisches oder syndiotaktisches Polypropylen, eingesetzt werden. Sowohl Wachse als auch Polymere können auch in modifizierter Form (z. B. mit Maleinsäureanhydrid modifiziert) verwendet werden. Auch der Einsatz vernetzter Polymere wie z. B. vernetzter Polyolefine oder vernetzter Styrol-Divinylbenzol-Polymerisate im pulverisierten Zustand ist möglich. Als anorganische Materialien kommen z. B. MgO, Talkum, Kieselsäure usw. in Frage. Darüber hinaus ist auch der Einsatz von Antistatika zur Verhinderung oder Verminderung der elektrostatischen Aufladung möglich.

In einer besonderen Ausführungsform der vorliegenden Erfindung findet zwischen der Polymersynthese und der Folienherstellung keine separate Granulierung statt. Stattdessen wird die im Polymerisationsprozess anfallende Polymerisationslösung nach Additivierung (z. B. mit Stabilisatoren) unmittelbar oder mittelbar (z. B. nach Transport in geeigneten beheizten oder unbeheizten Druckbehältern) für die Herstellung von Folien, beispielsweise Castfolien, verwendet. In einer weiteren besonderen Ausführungsform wird die im Aufarbeitungsprozess anfallende Polymerschmelze nach Additivierung (z. B. mit Stabilisatoren), aber ohne vorherige Konfektionierung, unmittelbar oder mittelbar (z.B. nach Transport in beheizten Schmelzecontainern) für die Herstellung der Extrusions- bzw. Blasfolien eingesetzt. Bei der anspruchsgemäßen Verwendung dieses Polyolefins in Folien enthält entweder eine einschichtige Folie das anspruchsgemäße Polyolefin bzw. besteht daraus, oder eine mehrschichtige Folie besitzt eine oder mehrere Schichten, die das anspruchsgemäße Polyolefin enthalten oder daraus bestehen. Bei derartigen Folien lassen sich die anspruchsgemäßen Polyolefine insbesondere vorteilhaft als Modifikator eines Ethylenpolymerisats, Propylenpolymerisats oder Poly-1-butens oder als Verträglichkeitsvermittler in Mischungen aus Ethylenpolymerisaten und Propylenpolymerisaten bzw. Poly-1-buten einsetzen. Hierdurch werden verbesserte mechanische Eigenschaften der Mischung sowie eine verbesserte Transparenz erhalten. Entsprechende Mischungen, die folgende Komponenten enthalten:

I. 0,1 bis 99,9 Gew.-%, bevorzugt 1 bis 99 Gew.-%, besonders bevorzugt 5 bis 95 Gew.-% und insbesondere bevorzugt 10 bis 90 Gew.-% des anspruchsgemäß verwendeten Polyolefins sowie

II. 99,9 bis 0,1 Gew.-%, bevorzugt 99 bis 1 Gew.-%, besonders bevorzugt 95 bis 5 Gew.-% und insbesondere bevorzugt 90 bis 10 Gew.-% eines Polyolefins, ausgewählt aus der Gruppe Ethylenpolymerisat, isotaktisches Propylenpolymerisat, syndiotaktisches Propylenpolymerisat, isotaktisches Poly-1-buten und syndiotaktisches Poly-1-buten,

wobei sich die Prozentangaben auf die Mischung der Komponenten I und II beziehen, können im Rahmen der vorliegenden Erfindung vorteilhaft verwendet werden. In einer möglichen Ausführungsform ist die Komponente gemäß II. eine Mischung aus einem Ethylenpolymerisat und einem oder mehreren der anderen genannten Polyolefine.

Durch die anspruchsgemäße Verwendung der weitgehend amorphen hochviskosen Polyolefine, sowohl alleine als auch in Mischungen mit PE- und PP-und/oder Polybutenpolymeren, lassen sich Folien mit besonders vorteilhaften Materialeigenschaften herstellen. Insbesondere werden ausgezeichnete Oberflächeneigenschaften sowie eine besonders weiche Oberflächenhaptik ohne zusätzliche Behandlung der Oberfläche erreicht. Bevorzugt werden die verwendeten weitgehend amorphen hochviskosen Polyolefine möglichst allein eingesetzt oder vor der Folienherstellung mit nur wenigen zusätzlichen Polymeren vermischt. Werden Mischungen mit zusätzlichen Polymeren verwendet, so werden bevorzugt 1 bis 3 Mischungspartner pro Folienschicht eingesetzt, besonders bevorzugt 1 bis 2 Mischungspartner, ganz besonders bevorzugt 1 Mischungspartner. Die Mischungspartner weisen dabei eine Schmelzviskosität bei Verarbeitungstemperatur auf, die sich bevorzugt im Bereich von 50 bis 300 % der Schmelzviskosität des verwendeten weitgehend amorphen hochviskosen Polyolefins befindet, besonders bevorzugt im Bereich 75 bis 200 %, ganz besonders bevorzugt im Bereich 75 bis 150 %. Mischungspartner sind dabei bevorzugt Homo-, Co- und/oder Terpolymere auf Basis von Polyethylen und/oder Polypropylen und/oder Poly(1-buten). Durch die Funktion des anspruchsgemäßen Polyolefins als Verträglichkeitsvermittler zwischen kristallinen und/oder teilkristallinen PE- und/oder PP-Blendpartnern oder -Polymerschichten wird insbesondere eine verbesserte Haftung der einzelnen Laminatschichten untereinander, wie auch eine verbesserte Transparenz der Folien erreicht. Zusätzlich wird die Haftung auf PP- und/oder PE-Polymeroberflächen sowie anderen Kunststoffoberflächen (insbesondere S/MSA, MSA-g-PP, ABS, SAN, Polystyrol, Polycarbonat, (Co) Polyestern, (Co)polyamiden, Polyacrylaten, insbesondere Polyalkylmethacrylaten) als auch auf Metall- und/oder Papier- und/oder Textiloberflächen ohne zusätzliche Verwendung von Klebschichten aus anderen Polymeren und/oder Harzen signifikant verbessert. Eine Oberflächenbehandlung (z. B. durch chemische Vorbehandlung, Coronaentladung, Hoch- bzw. Niederdruckplasma oder ähnliches) einzelner und/oder aller Folienschichten bzw. der fertigen Folien und/oder der damit in Kontakt zu bringenden Oberflächen ist nicht notwendig. Auf Grund der guten Haftung auf Metallen eignet sich die beschriebene Verwendung auch für die Herstellung von Polymer-Metall-Laminaten im Folienbereich, wie sie z. B. in Vakuum- und Aromaschutzverpackungen zum Einsatz kommen. Des Weiteren lassen sich durch die Verwendung der weitgehend amorphen hochviskosen Polyolefine Folien bzw. Filme herstellen, die besonders gute Heißsiegel- und Wärmeschrumpfeigenschaften besitzen sowie ein ausgezeichnetes Verhältnis von Rückstellkraft und Elastizität. Letzteres gilt insbesondere für die Verwendung zusammen mit PE-Homo- und/oder Copolymerschichten sowie die Verwendung zusammen mit PP-Homo- und/oder Copolymerschichten sowie die Verwendung zusammen mit Polybuten-Homo-und/oder Copolymerschichten. Die erzeugten Folien weisen je nach Zusammensetzung des verwendeten weitgehend amorphen hochviskosen Polyolefins auch eine hohe Wärmeformbeständigkeit auf. Die Tieftemperatureigenschaften (z. B. beim Einsatz im Kühl- und/oder Tietkühlbereich) der Folien sind ebenfalls über die Zusammensetzung des weitgehend amorphen hochviskosen Polyolefinpolymers einstellbar. Dabei werden für Tieftemperaturanwendungen bevorzugt Co- und Terpolymere mit höherem Anteil an $C_{4-20}$-Monomereinheiten verwendet. Es können sowohl Folien mit hoher als auch mit niedriger Wasserdamptbarrierewirkung (z. B. durch Perforation oder den Einbau anorganischer Bestandteile) hergestellt werden. In einigen Fällen kann der Einsatz von Harzen, insbesondere Kohlenwasserstoffharzen, bei der Herstellung einzelner Schichten oder auch der gesamten Folie sinnvoll sein. In diesen Fällen werden als synthetische Harze vorzugsweise solche verwendet, die einen Erweichungspunkt im Bereich von 60 bis 180 °C besitzen. Bei ungesättigten synthetischen Harzen werden bevorzugt die Hydrierungsprodukte eingesetzt. Ohne sich auf diese zu beschränken sind Beispiele für synthetische Harze zur erfindungsgemäßen Herstellung der Folien vorzugsweise Erdölharze, Styrolharze, Terpenharze, Cyclopentadienharze und/oder deren Co- bzw. Terpolymerisate. Die wirksame Harzkonzentration liegt dabei im Bereich von 1 bis 15 Gew.-%, bevorzugt 1 bis 10 Gew.-% besonders bevorzugt 1 - 5 Gew.-%, bezogen auf die jeweilige Schicht. In besonderen Fällen können sogenannte Antifoggingsubstanzen in einer, mehreren oder allen Folienschichten eingesetzt werden. Dabei können z. B. Fettsäureester und/oder Glycerinmono- bzw. Glycerindioleate zum Einsatz kommen. Die wirksame Konzentration liegt in der Regel zwischen 0,1 und 2 Gew.-% bezogen auf die jeweilige Folienschicht. Es können sowohl transparente und/oder glänzende als auch matte bzw. mattierte Folien hergestellt werden, wobei organische und/oder anorganische Füllstoffe kristalliner und/oder amorpher Natur im vernetzten, teilvernetzten und/oder unvernetzten Zustand zum Einsatz kommen können. Auch Farbpigmente können in beliebiger Variation zur Anwendung kommen. Die Verwendung in Folienanwendungen kann sowohl als Bestandteil einer Mischung in einer oder mehreren Folienschichten als auch als alleiniger Bestandteil einer oder mehrerer Folienschichten oder auch als alleiniger Bestandteil aller Folienschichten erfolgen. Es können sowohl Ein- als auch Mehrschichtfolien hergestellt werden, wobei das Material der einzelnen Schichten entweder gleich oder verschieden sein kann. Auch die Verwendung als Coating von PE- und/oder PP-Polymerschichten sowie von Schichten anderer Kunststoffe, insbesondere ABS, SAN, Polystyrol, Polycarbonat, Polyalkylmethacrylat, (Co)Polyestern, (Co)Polyamiden, usw. bei der Folienherstellung ist mit eingeschlossen, wobei in diesem Fall eine besonders gute Haftung der Schichten aufeinander erzielt wird. Das Coating kann dabei durch alle technisch gängigen Verfahren erfolgen, z. B. durch Sprühauftrag (von Polymerschmelze oder Polymerpulver), (Co)Extrusion, Rakelauftrag usw. Die Herstellung der Filme bzw. Folien kann durch alle technisch gängigen Herstellungsverfahren erfolgen, z. B. als Gießfolie, Blasfolie, Castfolie, durch (Co)Extrusion, durch Kalandrieren usw. Es können sowohl orientierte (mono- bzw. bi- oder multiaxial), als auch unorientierte Folien hergestellt werden. Bei einer biaxialen Streckung ist als Reihenfolge der Orientierungsprozesse das Längsstrecken (in Maschinenrichtung) mit darauf folgender Querstreckung (senkrecht zur Maschinenrichtung) bevorzugt. Wird eine Orientierung vorgenommen, so kann diese (beim Vorliegen mehrerer Orientierungsrichtungen) entweder simultan oder stufenweise erfolgen. Bei der Herstellung der Folien durch ein Extrusions- oder Coextrusionsverfahren werden die den einzelnen Schichten der Folie entsprechenden Polymerschmelzen durch eine Flachdüse extrudiert oder coextrudiert. Dafür werden die einzelnen Bestandteile der jeweiligen Schicht in einem Extruder komprimiert, verflüssigt und gegebenenfalls homogen vermischt. Bei den für den Aufschmelz- bzw. Mischprozess verwendeten Extrudern kann es sich sowohl um Einschneckenextruder als auch um Zweischneckenextruder (sowohl gleich- als auch gegenlaufend) oder Mehrwellenextruder (z. B. mit Zentralspindel) handeln. Die Bestückung der Schnecken kann z. B. mit einer den Material- und Mischanforderungen entsprechenden Mischung aus Förder-, Knet- und Mischelementen erfolgen. Beim Vorliegen von Mischaufgaben ist explizit die Verwendung von Schertorpedos eingeschlossen. In einer besonderen Ausführung erfolgt der Aufschmelzprozess ohne Zuhilfenahme von Schneckenmaschinen in einem Rührkessel; der Schmelzetransport zur Düse bzw. zum Rakel wird in diesem Fall über eine Zahnradpumpe gewährleistet. In der Regel werden die Schmelzen gleichzeitig durch eine Düse (z. B. eine Breitschlitzdüse) gepresst. Die ausgepresste ein- oder mehrschichtige Folie wird auf einer oder mehreren Kühlwalzen, gegebenenfalls auch auf einem Walzenstuhl abgekühlt und verfestigt. Die Walzen werden dabei auf Temperaturen von 0 bis 100 °C gehalten, bevorzugt bei 10 bis 80 °C, besonders bevorzugt bei 10 bis 30 °C. Werden zur Herstellung der erfindungsgemäßen Folien Kalander verwendet, so können sowohl 2-, 3-, 4- oder 5-Walzenkalander eingesetzt werden. Die Walzengeometrie kann dabei I-, F-, L-, Z- oder S-Form haben. Werden 4-Walzenkalander eingesetzt, so ist insbesondere bei der 1-Form auch die zusätzliche Verwendung einer Brustwalze möglich. Die erhaltene Folie wird zur Verfestigung abgekühlt und anschließend gegebenenfalls mono-, bi- und/oder multiaxial verstreckt und aufgewickelt. Durch die Verstreckung kommt es zu einer Orientierung der Molekülketten. Bei einer biaxialen Verstreckung wird in Längsrichtung bevorzugt im Verhältnis 2 : 1 bis 10 : 1 und in Querrichtung bevorzugt im Verhältnis 3 : 1 bis 10 : 1 verstreckt. Die Längsstreckung wird dabei bevorzugt bei einer Folientemperatur von 80 bis 150 °C, die Querstreckung hingegen bevorzugt bei einer Folientemperatur von 100 bis 180 °C durchgeführt. Zur Durchführung der Längsstreckung können beispielsweise gegebenenfalls gekühlte oder beheizte schnell laufende Walzen mit dem gewünschten Streckungsverhältnis entsprechender unterschiedlicher Umfangsgeschwindigkeit verwendet werden. Die Querverstreckung erfolgt beispielsweise mit Hilfe eines Kluppenrahmens. An alle Verstreckungen bzw. Orientierungen schließt sich vorzugsweise eine durch Wärmebehandlung durchgeführte Thermofixierung der Orientierung an. Dabei können je nach beabsichtigter Anwendung bei einer, mehreren oder allen Schichten der Folie auch gängige Antiblockiermittel und/oder Gleitmittel in der Größenordnung von 0,1 bis 2 Gew.-%, bezogen auf die jeweilige Folienschicht, eingesetzt werden. Geeignete Antiblockiermittel sind dabei z. B. anorganische Zusatzstoffe, wie Siliziumdioxid, Calciumcarbonat, Magnesiumsilicat, Aluminiumsilikat, Calciumphosphat, Zinkstearat, Zinkoxid, Magnesiumoxid, oder nichtionogene Tenside, anionaktive Tenside und/oder unverträgliche organische Polymerisate, wie Polyamide, Polyester und/oder Polycarbonate usw. Wirksame Gleitmittel, die ebenfalls in einem Bereich von 0,1 bis 2 Gew.-% (bezogen auf die jeweilige Film- bzw. Folienschicht) eingesetzt werden, sind z. B. höhere aliphatische Säureamide und/oder Säureester, Wachse und/oder Metallseifen.

Besonders bevorzugt ist die Verwendung von Wachsen, insbesondere von Paraffin-, Fischer-Tropsch- und/oder Olefmwachsen. Die erfindungsgemäß hergestellten Folien eignen sich insbesondere für den Einsatz auf schnell laufenden Verpackungsmaschinen. Sie besitzen eine (je nach Zusammensetzung ein- bzw. beidseitige) gute Siegelbarkeit und sehr gute Laufeigenschaften.

Selbstverständlich kann das anspruchsgemäße Polyolefin auch zur Herstellung von Blasfolien verwendet werden, wobei jede bekannte Technologie eingesetzt werden kann.

Auch die Herstellung von Verbundfolien ist ausdrücklich in die Erfindung eingeschlossen. Dabei können als Verbundmaterialien z. B. Fasern, Fleece, Nonwoven oder ähnliches zum Einsatz kommen. Diese können z. B. aus anderen Kunststoffen (z. B. Polyamiden, Polyestern, PEK, PEEK usw.) oder auch aus anorganischen Materialien (z. B. Kohlenstoff/Kohlefasern, Glas/Glasfasern usw.) hergestellt sein. Die Herstellung der Verbundfolien kann sowohl durch Kaschierung als auch durch Extrusionsbeschichtung erfolgen.

Werden die Folien durch Beschichtung bzw. Lackierung hergestellt, so können z. B. Walzenauftrag, Umkehrwalzenbeschichtung, Aufkalandrieren, Walzenauftrag, Rakel, Tauchwalzenauftrag usw. als Beschichtungstechnik verwendet werden. Als Lacke für die Folien kommen physikalisch trocknende Systeme, z. B. auf Basis von synthetischen Harzen, in Frage.

Bei der Herstellung von Barrierefolien, insbesondere unter Verwendung von Metallschichten, können als Herstellungsverfahren z. B. Metallisierung und Keramisierung zum Einsatz kommen. Bei den Metallisierungsverfahren sind insbesondere die chemische Abscheidung aus der Dampfphase, thermische Abscheideverfahren sowie die Elektronenstrahlbeschichtung zu nennen.

Die erfindungsgemäß hergestellten Folien können z. B. im Bereich Verpackung eingesetzt werden, sind aber nicht auf diesen beschränkt. Es sind sowohl Transport-, Um- als auch Einzelverpackungen eingeschlossen. Die Anwendungsbereiche erstrecken sich über Lebensmittelverpackungen, Verpackungen elektronischer Bauteile und/oder Geräte, medizinische Verpackungen, Spielzeugverpackungen, Textilverpackungen (incl. Schutzfolien, wie sie z. B. in Reinigungen verwendet werden), Verpackungen von Lederwaren und Schuhen, Werkzeugverpackungen, Palettenumhüllungen, Verpackungen von (technischen) Gebrauchsgütern, Verpackungen von Schmuckartikeln, Verpackungen von Papierwaren und Druckerzeugnissen usw. Bei Lebensmittelverpackungen sind insbesondere Verpackungsfolien im Haushaltsbereich (z. B. sog. Cling-Folien) wie auch insbesondere wieder verschließbare Lebensmittelverpackungen, wie sie beim Abpacken und/oder Verkauf von frischen Lebensmitteln (z. B. Obst, Gemüse, Fleisch, Fisch, Käse, Brot, Backwaren, Süßigkeiten und/oder fertigen bzw. teilfertigen Lebensmittelzubereitungen) Verwendung finden (mit und ohne Wärmeschrumpfung), sowie Aromaschutzverpackungen, Geruchsbarrieren usw. eingeschlossen. Die Verpackungen können im Normaltemperaturbereich, aber auch im Kühl- und/oder Tiefkühlbereich oder auch im Bereich von Mikrowellenfolien (z. B. in der Verpackung von Fertiggerichten, Snacks, Popkorn oder ähnlichem) eingesetzt werden. Insbesondere eingeschlossen sind dabei Verpackungen von Frischfleisch, Tiefkühlfleisch, Frischfisch, Tiefkühlfisch, Frischgemüse, Tiefkühlgemüse, Frischobst, Tiefkühlobst sowie von frischen oder tiefgekühlten Backwaren. Es sind sowohl Verpackungen für menschliche als auch für tierische Nahrungsmittel (z. B. Hunde- bzw. Katzenfutter, Beißknochen oder ähnliches) eingeschlossen. Die erfindungsgemäß hergestellten Verpackungen erstrecken sich auch auf den Bereich der Vakuum- und (Schutz)gasverpackungen, wobei auch metallbeschichtete bzw. laminierte Folien mit eingeschlossen sind. Bei (Schutz)gasverpackungen sind insbesondere Verpackungen unter Verwendung von Sauerstoff, Kohlenstoffdioxid, Kohlenstoffmonoxid, Stickstoff, Ethan, Acetylen, Argon, Helium oder anderer Edelgase explizit eingeschlossen, die eine besondere Barrierefunktion der verwendeten Folie verlangen. Auch die Verwendung anderer Schutzgase ist möglich. Bei Vakuumverpackungen werden insbesondere Aromaschutzverpackungen, wie sie für Kaffee und Tee verwendet werden, mit eingeschlossen. Weiterhin eingeschlossen sind Verbundverpackungen aus Papier bzw. Pappe und der erfindungsgemäß hergestellten Folien, bei denen die Folien auf den Papier- bzw. Pappträger auflaminiert werden. Beispiele hierfür sind z. B. Verpackungen für Tiefkühlbackwaren bzw. ungekühlte Backwaren, aber auch Verpackungen für Waschmittel usw. Als Umverpackungen technischer Gebrauchsgüter sind z. B. auch Folien, die zum Schutz von CD- bzw. DVD-Covem verwendet werden, mit eingeschlossen. Auch Spielzeugverpackungen sowie die Umverpackungen für Spielzeugsatzkästen sind eingeschlossen. Weitere Anwendungen sind Präge- und Dekorfolien, Wursthüllen und Schäldärme.

Ein weiteres Anwendungsgebiet für die erfindungsgemäß hergestellten Folien sind Schutzfolien. Diese können sowohl für technische Gebrauchsgüter, z. B. im Kfz-Bereich zum Schutz von Lackschichten, Kunststoff- oder Glasoberflächen als auch für architektonische Elemente (z. B. Fenster und Fensterrahmen) oder in der Möbelindustrie (z. B. bei lackierten Flächen, bei Glaselementen usw.) sowie bei Elektrogeräten (z. B. für Bildschirme, Fernsehgeräte, Monitore, Videogeräte, Stereo- bzw. Audiogeräte, Spielekonsolen usw.) und im Telekommunikationsbereich (z. B. zum Schutz von Handydisplays oder den Displays von sog. PDAs) sowie als Schutzfolien für die Oberflächen von Koffern (z. B. Hartschalenkoffern aus Kunststoff und/oder Aluminium) Verwendung finden. Sie sind in der Regel wieder abziehbar. Auch Abdeckfolien, wie sie z. B. im landwirtschaftlichen Bereich (z. B. zum Abdecken von sog. "Mieten", zum Schutz landwirtschaftlicher Produktionsgüter wie z. B. Heu oder Getreide vor Witterungseinflüssen oder zum verbesserten Wärmeeintrag z. B. im Spargel-, Salat- und Erdbeeranbau Verwendung finden, sind mit eingeschlossen, ebenso Folien, die für Gewächshäuser, Folientunnel und/oder Anzuchtbeete verwendet werden.

Die erfindungsgemäßen Folien bzw. die Folienschichten, die das anspruchsgemäß verwendete Polyolefin enthalten, besitzen bevorzugt eine Mindestdicke von 0,01 mm, 0,02 mm, 0,05 mm, 0,1 mm, 0,15 mm oder 0,2 mm sowie bevorzugt eine maximale Dicke von 5 mm, 4 mm, 3 mm, 2,5 mm, 2 mm, 1,5 mm, 1,2 mm, 1 mm, 0,9 mm, 0,8 mm, 07 mm, 0,6 mm oder 0,5 mm. Sofern bestimmte Anwendungen dies verlangen, kann die Dicke jedoch auch darunter oder darüber liegen.

Die Erfindung wird im Folgenden beispielhaft erläutert.

Beispiele 1 bis 8: Herstellung geeigneter Polyolefine

Unter Verwendung eines Mischkontaktes aus einem kristallinen Titantrichlorid in Form eines mit Aluminium reduzierten $TiC_4$ ($TiCl_3 \cdot 0,33\ AlCl_3$) und Aluminiumtriisobutyl (im Gewichtsverhältnis 1 : 4) wurden die in der Tabelle 1 angegebenen Monomere in n-Butan bei der in der Tabelle 1 angegebenen Temperatur in einem Laborautoklaven polymerisiert, wobei gegebenenfalls Wasserstoff als Molmassenregler eingesetzt wurde. Es traten Drücke von 22 bis 25 bar auf. Die Monomeren Ethen und Propen wurden während der Reaktionszeit von 3 h kontinuierlich zudosiert; das Monomer 1-Buten sowie gegebenenfalls verwendete höhere Olefme wurden vorgelegt. Nach 3 h wurde die Reaktionsmischung mit Isopropanol versetzt, wodurch die Reaktion abgestoppt wurde. In einem Verdampfer wurden nicht umgesetzte Monomere sowie das Lösungsmittel n-Butan verdampft. Die Schmelze des Polyolefms wurde bei einer Temperatur von ca. 190 °C abgelassen.

Die Analyse der erhaltenen Produkte ergab Werte, die in der Tabelle 1 zusammengestellt sind.

Meßmethode 1 zur Bestimmung der Löslichkeit in Xylol:

2 g Polyolefin werden in 250 ml Xylol unter Rühren und Heizen bis zum Siedepunkt von Xylol gelöst. Nachdem 20 min unter Rückfluss gekocht wurde, lässt man die Polymerlösung auf 25°C abkühlen. Ungelöstes bzw. ausgefallenes Polyolefin wird abgenutscht (15 cm-Nutsche, Sartorius 390-Filterpapier) und getrocknet. Die überbleibende Polymerlösung wird in einem 5fachen Überschuss an Methanol (mit einem Tropfen 37-prozentiger wässriger HCl versetzt) ausgefällt. Der entstehende Niederschlag wird abgenutscht und bei 80 °C im Trockenschrank (Vakuum) getrocknet.

Meßmethode 2 zur Bestimmung von $M_w$, der Polydispersität und des Alpha-Werts:

Die zu vermessenden Proben werden in 4 ml-Vials eingewogen, mit 3 ml frisch destilliertem und mit 0,5 g Butylhydroxytoluol/Liter stabilisiertem 1,2,4-Trichlorbenzol versetzt und 20 Minuten unter leichtem Rühren bei 165 °C gelöst. Die Proben werden bei 160 °C auf einer Waters 150C Hochtemperatur-GPC vermessen. Die Flussrate beträgt 1,1 ml/min; es wird eine Kombination aus drei SDV-Säulen (10e6A, 10e5A und 10e3A plus Vorsäule, 10 $\mu$m) der Firma Polymer Standards Service GmbH, D-55120 Mainz benutzt. Als Detektor dient ein integrierter Refraktionsindexdetektor der Firma Waters sowie der Viskositätsdetektor H502B der Firma Viskotek. Es wird eine universelle Kalibrierung mit Polyolefinen vorgenommen (Kalibrierkurve aus Polystyrol, Polyisobuten und Polyethylen der Firma Polymer Standards Service GmbH). Alle Proben werden doppelt eingewogen und vermessen. Die Auswertung erfolgt mit dem Softwarepaket Win_gpc6.

Tabelle 1: Beispiele 1 bis 8, Herstellung und Eigenschaften

| Beispiel | 13C-NMR | | Reaktionsparameter | | | DSC | | | GPC | | | | |
| | Monomer-einheiten | Gehalt [Gew.-%] | Reaktions-temperatur [°C] | $H_2$-Menge [Normliter] | Nadel-penetration [0,1 mm] | Tg [°C] | Schmelzenthalpie [J/g] | Ende des Schmelzbereichs [°C] | $M_w$ (g/mol) | Poly-dispersität | Alpha | η bei 190°C [mPa•s] | Löslichkeit in Xylol |
|---|---|---|---|---|---|---|---|---|---|---|---|---|---|
| 1 | Ethen Propen 1-Buten | 10 61 29 | 85 | 1 | 22 | -34 | 2,3 | 112 | 133.000 | 5,3 | 0,71 | 221.000 | 99,3 |
| 2 | Ethen Propen 1-Buten | 14 57 29 | 86 | 0,75 | 21 | -35 | 2,1 | 114 | 170.000 | 6,1 | 0,69 | 355.000 | 99,1 |
| 3 | Ethen Propen 1-Buten | 13 70 17 | 86 | 0,5 | 16 | -31 | 7,1 | 115 | 203.000 | 7,4 | 0,77 | 529.000 | 99,5 |
| 4 | 1-Buten | 100 | 96 | 0,25 | 12 | -29 | 12 | 110 | 95.200 | 7,3 | 0,69 | 910.000 | 98,9 |
| 5 | Ethen 1-Buten | 7,2 92,8 | 96 | 0,25 | 15 | -34 | 5,5 | 99 | 96.200 | 6,4 | 0,74 | 730.000 | 99,3 |
| 6 | Propen | 49 | 90 | 0,125 | 16 | -20 | 9,0 | 116 | 195.000 | 8,6 | 0,68 | 2.400.000 | 94,5 |
| 7 | 1-Buten | 100 | 96 | 0,125 | 15 | -30 | 9,7 | 110 | 178.000 | 5,9 | 0,71 | 2.500.000 | 98,8 |
| 8 | Ethen Propen 1-Octen | 9 46 45 | 105 | 0 | 38 | -38 | 3,2 | 125 | 337.000 | 22 | 0,63 | 920.000 | 90,2 |

Herstellung der Mischungen:

Für die Herstellung der Folien wurden Schmelzemischungen auf einem Doppelschneckenextruder ZSK 25 (Fa. Werner & Pfleiderer) in 200 °C hergestellt, als Strang ausgetragen und granuliert.

Neben den Produkten der Beispiele 1 und 2 wurden als Blendpartner folgende Polymere eingesetzt:

- Sabic PP 520 P, ein isotaktisches Polypropylen
- Sabic LDPE 2101, ein Hochdruck-Polyethylen (LDPE)
- Sabic LLDPE 3188, ein lineares Polyethylen niedriger Dichte (LLDPE)

Das Granulat wurde zur Herstellung von Blasfolien sowie Flachfolien eingesetzt.

Beispiel 9: Einschichtige Blasfolien der Dicke 0,058 mm

Details und Ergebnisse im Vergleich mit reinem isotaktischen Polypropylen sind in der Tabelle 2 wiedergegeben.
Man erkennt, dass bei Verwendung des Blends sowohl die Zugfestigkeit als auch die Reißdehnung der Folie verbessert sind.

Tabelle 2: Beispiel 9; Zusammensetzung der Blasfolienschicht und Ergebnisse (gemessen in Längsrichtung)

| Erfindungsgemäßes PO | Blendpartner [Gew.-%] | E-Modul [MPa] | Zugfestigkeit [MPa] | Reißdehnung [%] |
|---|---|---|---|---|
| aus Beispiel 2 | Sabic PP 520 P | DIN ISO 527/V | DIN ISO 527/V | DIN ISO 527/V |
| 0 | 100 | 544 | 38 | 607 |
| 10 | 90 | 532 | 41 | 690 |

Beispiel 10: Coextrudierte dreischichtige Blasfolien der Dicke 0,049 mm

Details und Ergebnisse im Vergleich mit einer Dreischichtfolie mit Außenschichten aus reinem LDPE sind in der Tabelle 3 wiedergegeben.

Tabelle 3: Beispiel 10; Zusammensetzung der Blasfolienschichten (Gew.-%) und Ergebnisse (gemessen in Längsrichtung)

| Schicht 1 | | Schicht 2 | Schicht 3 | | E-Modul [MPa] | Zugfestigkeit [MPa] | Reißdehnung [%] |
|---|---|---|---|---|---|---|---|
| Produkt aus Beispiel 2 | Sabic LDPE 2101 | Sabic PP 520 | Produkt aus Beispiel 2 | Sabic LDPE 2101 | DIN ISO 527/V | DIN ISO 527/V | DIN ISO 527/V |
| 0 | 100 | 100 | 0 | 100 | 197 | 27 | 438 |
| 10 | 90 | 100 | 10 | 90 | 214 | 27 | 530 |

Man erkennt, dass bei gleichbleibender Zugfestigkeit sowohl der E-Modul als auch die Reißdehnung verbessert ist. Beides kann als Beleg für eine deutlich verbesserte Haftung der drei Folienschichten aufeinander gewertet werden.
Beipiel 11: Coextrudierte dreischichtige Flachfolien Details und Ergebnisse im Vergleich mit einer Dreischichtfolie ohne Verwendung eines erfindungsgemäßen Polyolefins sind in der Tabelle 4 wiedergegeben.

Tabelle 4: Beispiel 11; Zusammensetzung der Flachfolienschichten (Gew.-%) und Ergebnisse (gemessen in Längsrichtung)

| Schicht 1 | | Schicht 2 | | Schicht 3 | | E-Modul [MPa] | Zugfestigkeit [MPa] | Reißdehnung [%] |
|---|---|---|---|---|---|---|---|---|
| Produkt aus Beispiel 1 | Sabic LLDPE 3188 | Produkt aus Beispiel 1 | SabicPP 520 P | Produkt aus Beispiel 1 | Sabic LLDPE 3188 | DIN ISO 527/V | DIN ISO 527/V | DIN ISO 527/V |
| 0 | 100 | 0 | 100 | 0 | 100 | 163 | 29 | 618 |
| 0 | 100 | 10 | 90 | 0 | 100 | 179 | 28 | 629 |
| 10 | 90 | 0 | 100 | 10 | 90 | 264 | 29 | 570 |

Man erkennt auch hier, dass bei gleichbleibender Zugfestigkeit sowohl der E-Modul als auch die Reißdehnung verbessert ist. Beides kann als Beleg für eine deutlich verbesserte Haftung der drei Folienschichten aufeinander gewertet werden.

**Patentansprüche**

1. Verwendung eines Polyolefins, das folgende Monomereinheiten enthält:

   a) maximal 25 Gew.-% Einheiten, die sich von Ethen herleiten,
   b) maximal 75 Gew.-% Einheiten, die sich von Propen herleiten, sowie
   c) 5 bis 100 Gew.-% Einheiten, die sich von einem $\alpha$-Olefin mit 4 bis 20 C-Atomen herleiten,
   wobei das Polyolefin folgende Parameter aufweist:
   d) ein gewichtsmittleres Molekulargewicht im Bereich von 70.000 bis 10.000.000 g/mol,
   e) eine Polydispersität im Bereich von 4 bis 60,
   f) eine Schmelzviskosität, gemessen durch Oszillationsrheometrie mit einer Schergeschwindigkeit von 1 Hz bei 190 °C, im Bereich von 100.000 bis 100.000.000 mPa•s,
   g) eine Nadelpenetration im Bereich von 3 bis 70 • 0,1 mm,
   h) eine Schmelzenthalpie im Bereich von 2 bis 100 J/g,
   i) eine Glasübergangstemperatur $T_g$ im Bereich von -15 °C bis -80 °C, sowie
   j) ein Ende des Schmelzbereichs des kristallinen Anteils im Bereich von 85 bis 175 °C, zur Herstellung von Folien.

2. Verwendung gemäß Anspruch 1,
   **dadurch gekennzeichnet,**
   **dass** das gewichtsmittlere Molekulargewicht des Polyolefins mindestens 100.000 g/mol beträgt.

3. Verwendung gemäß einem der Ansprüche 1 und 2,
   **dadurch gekennzeichnet,**
   **dass** das Polyolefin durch Polymerisation von $\alpha$-Olefin-Monomeren mit einem $TiCl_3$ • $(AlCl_3)_n$-Mischkatalysator und einer Trialkylaluminiumverbindung als Cokatalysator erhältlich ist, wobei n = 0,2 bis 0,5 und wobei das molare Verhältnis von Katalysator zu Cokatalysator 1 : 1 bis 1 : 10 beträgt.

4. Verwendung gemäß einem der Ansprüche 1 bis 3,
   **dadurch gekennzeichnet,**
   **dass** das Polyolefin einen Alpha-Wert im Bereich von 0,5 bis 0,9 besitzt.

5. Folie, die in mindestens einer Schicht ein Polyolefin gemäß einem der Ansprüche 1 bis 4 enthält.

6. Folie gemäß Anspruch 5,
   **dadurch gekennzeichnet,**
   **dass** neben dem Polyolefin in der Schicht kein weiteres Polymer enthalten ist.

7. Folie gemäß Anspruch 5,

**dadurch gekennzeichnet,**
**dass** mindestens eine Schicht aus einer Mischung folgender Komponenten besteht:

I. 0,1 bis 99,9 Gew.-% des anspruchsgemäßen Polyolefins sowie
II. 99,9 bis 0,1 Gew.-% eines Polyolefins, ausgewählt aus der Gruppe Ethylenpolymerisat, isotaktisches Propylenpolymerisat, syndiotaktisches Propylenpolymerisat, isotaktisches Poly-1-buten und syndiotaktisches Poly-1-buten,

wobei sich die Prozentangaben auf die Mischung der Komponenten I und II beziehen.

8. Folie gemäß einem der Ansprüche 5 bis 7,
**dadurch gekennzeichnet,**
**dass** die Folie eine Lebensmittelverpackungsfolie oder eine Schutzfolie ist.

## Claims

1. Use of a polyolefin which contains the following monomer units:

a) not more than 25% by weight of units which are derived from ethene,
b) not more than 75% by weight of units which are derived from propene and
c) from 5 to 100% by weight of units which are derived from an $\alpha$-olefin having 4 to 20 carbon atoms,
the polyolefin having the following parameters:
d) a weight-average molecular weight in the range of from 70 000 to 10 000 000 g/mol,
e) a polydispersity in the range of from 4 to 60,
f) a melt viscosity, measured by oscillation rheometry at a shear rate of 1 Hz at 190°C, in the range of from 100 000 to 100 000 000 mPa•s,
g) a needle penetration in the range of from 3 to 70 • 0.1 mm,
h) an enthalpy of fusion in the range of from 2 to 100 J/g,
i) a glass transition temperature Tg in the range of from -15°C to -80°C and
j) a final melting point of the crystalline fraction in the range of from 85 to 175°C,

for the production of a sheet.

2. Use according to Claim 1, **characterized in that** the weight-average molecular weight of the polyolefin is at least 100 000 g/mol.

3. Use according to either of Claims ; 1 and 2, **characterized in that** the polyolefin is obtainable by polymerization of $\alpha$-olefin monomers using a $TiCl_3 • (AlCl_3)_n$ mixed catalyst and a trialkylaluminum compound as cocatalyst, n being from 0.2 to 0.5 and the molar ratio of catalyst to cocatalyst being from 1:1 to 1:10.

4. Use according to any one of Claims 1 to 3, **characterized in that** the polyolefin has an alpha value in the range of from 0.5 to 0.9.

5. Sheet which contains, in at least one layer, a polyolefin according to any one of Claims 1 to 4.

6. Sheet according to Claim 5, **characterized in that,** apart from the polyolefin, no further polymer is present in the layer.

7. Sheet according to Claim 5, **characterized in that** at least one layer consists of a blend of the following components:

I. from 0.1 to 99.9% by weight of the claimed polyolefin and
II. from 99.9 to 0.1% by weight of a polyolefin selected from the group consisting of ethylene polymer, isotactic propylene polymer, syndiotactic propylene polymer, isotactic poly-1-butene and syndiotactic poly-1-butene,

the stated percentages being based on the blend of components I and II.

8. Sheet according to any one of Claims 5 to 7, **characterized in that** the sheet is a food packaging sheet or a protective sheet.

**Revendications**

1.  Utilisation d'une polyoléfine qui contient les unités monomères suivantes :

    a) au maximum 25% en poids d'unités qui sont dérivées d'éthylène,
    b) au maximum 75% en poids d'unités qui sont dérivées de propylène, ainsi que
    c) 5 à 100% en poids d'unités qui sont dérivées d'une $\alpha$-oléfine comprenant 4 à 20 atomes de carbone,
    la polyoléfine présentant les paramètres suivants :
    d) un poids moléculaire pondéral moyen dans la plage de 70 000 à 10 000 000 g/mole.
    e) une polydispersité dans la plage de 4 à 60,
    f) une viscosité en masse fondue, mesurée par une rhéométrie par oscillation à une vitesse de cisaillement de 1 Hz à 190°C, dans la plage de 100 000 à 100 000 000 mPa.s,
    g) une pénétration d'aiguille dans la plage de 3 à 70.0,1 mm,
    h) une enthalpie de masse fondue dans la plage de 2 à 100 J/g,
    i) une température de transition vitreuse Tg dans la plage de -15°C à -80°C, ainsi que
    j) une fin de la zone de fusion de la proportion cristalline dans la plage de 85 à 175°C,
    pour la production de feuilles.

2.  Utilisation selon la revendication 1, **caractérisée en ce que** le poids moléculaire pondéral moyen de la polyoléfine est d'au moins 100 000 g/mole.

3.  Utilisation selon l'une quelconque des revendications 1 et 2, **caractérisée en ce que** la polyoléfine peut être obtenue par polymérisation de monomères de type $\alpha$-oléfine avec un catalyseur mixte $TiCl_3.(AlCl_3)_n$ et un composé de type trialkylaluminium comme cocatalyseur, où n = 0,2 à 0,5 et où le rapport molaire de catalyseur à cocatalyseur est de 1:1 à 1:10.

4.  Utilisation selon l'une quelconque des revendications 1 à 3, **caractérisée en ce que** la polyoléfine présente une valeur alpha dans la plage de 0,5 à 0,9.

5.  Feuille, qui contient dans au moins une couche une polyoléfine selon l'une quelconque des revendications 1 à 4.

6.  Feuille selon la revendication 5, **caractérisée en ce que** la couche ne contient pas d'autre polymère en plus de la polyoléfine.

7.  Feuille selon la revendication 5, **caractérisée en ce qu'**au moins une couche est constituée par un mélange des composants suivants :

    I. 0,1 à 99,9% en poids de la polyoléfine selon les revendications ainsi que
    II. 99,9 à 0,1% en poids d'une polyoléfine choisie dans le groupe formé par le polymère d'éthylène, le polymère isotactique de propylène, le polymère syndiotactique de propylène, le poly-1-butène isotactique et le poly-1-butène syndiotactique,
    les indications en % se rapportant au mélange des composants I et II.

8.  Feuille selon l'une quelconque des revendications 5 à 7, **caractérisée en ce que** la feuille est une feuille d'emballage pour aliments ou une feuille de protection.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- JP 2003073511 A
- JP 2001171057 A
- JP 09001751 A
- JP 2002294216 A
- DE 10133903 A
- JP 11058634 A

### In der Beschreibung aufgeführte Nicht-Patentliteratur

- **S. BERGER ; S. BRAUN ; H.-O. KALINOWSKI.** C-NMR-Spektroskopie. Georg Thieme Verlag, 1985
- **A.E. TONELLI.** NMR Spectroscopy and Polymer Microstructure. Verlag Chemie Weinheim, 1989
- **J. L. KOENIG.** Spectroscopy of Polymers, ACS Professional Reference Books. 1992
- **J.C. RANDALL.** Polymer Sequence Determination. Academic Press, 1977
- **A. ZAMBELLI et al.** *Macomolecules,* 1975, vol. 8, 687
- **A. FILHO ; G.GALLAND.** *J. Appl. Polym. Sci.,* 2001, vol. 80, 1880
- **H. G. ELIAS.** Makromoleküle. Wiley-VCH, 2001, vol. 2
- **Z. GRUBISIC ; P. REMPP ; H. BENOIT.** *Polym. Lett.,* 1967, vol. 5, 753
- **K. A. BONI ; F. A. SLIEMERS ; P. B. STICKNEY.** *J.Polym.Sci.,* 1968, vol. A2 (6), 1579
- **D. GOEDHART ; A. OPSCHOOR.** *J. Polym. Sci.,* 1970, vol. A2 (8), 1227
- **A. RUDIN ; H.L.W. HOEGY.** *J. Polym. Sci.,* 1972, vol. AI (10), 217
- **G. SAMAY ; M. KUBIN ; J. PODESVA.** *Angew. Makromol. Chem.,* 1978, vol. 72, 185
- **B. IVAN ; Z. LASZLO-HEDVIG ; T. KELEN ; F. TÜDOS.** *Polym. Bull.,* 1982, vol. 8, 311
- **K.-Q. WANG ; S.-Y. ZHANG ; J. XU ; Y. LI ; H.P. LI.** *J. Liqu. Chrom.,* 1982, vol. 5, 1899
- **T.G. SCHOLTE ; H.M. SCHOFFELEERS ; A.M.G. BRANDS.** *J. Appl. Polym. Sci.,* 1984, vol. 29, 3763
- **H.-G. ELIAS.** Makromoleküle. Wiley-VCH, 2001, vol. 2, 411-413
- **N.P.CHEREMISINOFF.** An Introduction to Polymer Rheology and Processing. CRC Press, 1993
- **R.S.LENK.** Rheologie der Kunststoffe. C. Hanser Verlag, 1971
- Rheologisches Verhalten von KunststoffSchmelzen und -Lösungen. **J. MEISSNER.** Praktische Rheologie der Kunststoffe. VDI-Verlag, 1978
- **J.-F. JANSSON.** *Proc.8th. Int .Congr. Rheol.,* 1980, vol. 3